(19) Europäisches Patentamt
European Patent Office
Office européen des brevets

(11) **EP 2 013 257 B1**

(12) **EUROPÄISCHE PATENTSCHRIFT**

(45) Veröffentlichungstag und Bekanntmachung des Hinweises auf die Patenterteilung:
**01.02.2012 Patentblatt 2012/05**

(21) Anmeldenummer: **07727977.6**

(22) Anmeldetag: **11.04.2007**

(51) Int Cl.:
***C08G 18/66*** *(2006.01)*

(86) Internationale Anmeldenummer:
**PCT/EP2007/053509**

(87) Internationale Veröffentlichungsnummer:
**WO 2007/118827 (25.10.2007 Gazette 2007/43)**

(54) **THERMOPLASTISCHE POLYURETHANE**

THERMOPLASTIC POLYURETHANES

POLYURÉTHANES THERMOPLASTIQUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **19.04.2006 EP 06112735**

(43) Veröffentlichungstag der Anmeldung:
**14.01.2009 Patentblatt 2009/03**

(73) Patentinhaber: **BASF SE**
**67056 Ludwigshafen (DE)**

(72) Erfinder:
• **HENZE, Oliver Steffen**
**28195 Bremen (DE)**
• **KRECH, Rüdiger**
**49356 Diepholz (DE)**
• **PRISSOK, Frank**
**49448 Lemförde (DE)**
• **SCHEFFER, Karin**
**49448 Lemförde (DE)**
• **SCHÄFER, Frank**
**32351 Stemwede (DE)**
• **NIERMANN, Heinrich**
**49448 Brockum (DE)**

(56) Entgegenhaltungen:
**EP-A1- 0 004 937       EP-A2- 0 152 049**
**EP-A2- 0 571 831       US-A1- 2003 122 282**

• **"RECYCLING PROJECT FOR SKI BOOTS" Februar 1993 (1993-02), EUROPEAN PLASTICS NEWS, EMAP BUSINESS PUBLICATION, LONDON, GB, PAGE(S) 10 , XP000373616 ISSN: 0306-3534 Zusammenfassung**

Bemerkungen:
Die Akte enthält technische Angaben, die nach dem Eingang der Anmeldung eingereicht wurden und die nicht in dieser Patentschrift enthalten sind.

EP 2 013 257 B1

**Beschreibung**

Die Erfindung betrifft Verfahren zur Herstellung von thermoptastischem Polyurethan durch Umsetzung von (a) =4,4'-Diphenylmethandiisocyanate (b) gegenüber Isocyanaten reaktiven Verbindungen mit einem Molekulargewicht ($M_n$) zwischen 500 und 10000 g/mol und (c) Kettenverlängerungsmitteln mit einem Molekulargewicht zwischen 50 und 499 g/mol gegebenenfalls in Gegenwart von (d) Katalysatoren und/oder (e) üblichen Zusatzstoffen, wobei man ein Kettenveriängerergemisch bestehend aus einem =1,4-Butandiol-Hauptkettenverlängerer (c1) und einem =1,3-Propandiol-Cokettenverlängerern (c2) einsetzt und das hergestellte thermoplastische Polyurethan einen Hartphasenanteil von größer 0,4, bevorzugt größer 0,5 aufweist, wobei der Hartphasenanteil durch folgende Formel definiert ist:

$$Hartphasenanteil = \{\sum_{x=1}^{k}[(m_{KVx}\,/\,M_{KVx})\,^{*}\,M_{Iso} + m_{KVx}]\}\,/\,m_{ges}$$

mit den folgenden Bedeutungen:

$M_{KVx}$: Molare Masse der Kettenverlängerers x in g/mol
$m_{KVx}$: Masse des Kettenverlängerers x in g
$M_{ISO}$: Molare Masse des verwendeten Isocyanates in g/mol
$m_{ges}$: Gesamtmasse aller Ausgangsstoffe in g
k: Anzahl der Kettenverlängerer.

sowie derart erhältliches thermoplastisches Polyurethan. Desweiteren bezieht sich die Erfindung auf Skischuhe, bevorzugt Skistiefel, besonders bevorzugt äußere Schale eines Skistiefels, basierend auf thermoplastischem Polyurethan erhältlich durch Umsetzung von (a) =4,4'-Diphenylmethandiisocyanate mit (b) gegenüber Isocyanaten reaktiven Verbindungen mit einem Molekulargewicht ($M_n$) zwischen 500 und 10000 g/mol und (c) Kettenverlängerungsmitteln, bevorzugt Diolen, besonders bevorzugt Alkandiolen, mit einem Molekulargewicht zwischen 50 und 499 g/mol gegebenenfalls in Gegenwart von (d) Katalysatoren und/oder (e) üblichen Zusatzstoffen, wobei der Kettenverlängerer (c) ein Ge=1,3-Propandiol- misch darstellt mit einem =1,4-Butandiol-Hauptkettenvertängerer (c1) und einem =1,3-Propandiol-Cokettenverlängerern (c2). Außerdem betrifft die Erfindung Verfahren zur Herstellung von Skischuhen, bevorzugt Skistiefel, besonders bevorzugt äußere Schale eines Skistiefels, wobei man das erfindungsgemäße thermoplastische Polyurethan mittels Spritzguss zum Skischuh, bevorzugt Skistiefel, besonders bevorzugt äußere Schale eines Skistiefels verarbeitet.

Thermoplastische Kunststoffe sind Kunststoffe, die, wenn sie in dem für den Werkstoff für Verarbeitung und Anwendung typischen Temperaturbereich wiederholt erwärmt und abgekühlt werden, thermoplastisch bleiben. Unter thermoplastisch wird die Eigenschaft eines Kunststoffes verstanden, in einem für ihn typischen Temperaturbereich wiederholt in der Wärme zu erweichen und beim Abkühlen zu erhärten und im erweichten Zustand wiederholt durch Fließen als Formteil, Extrudat oder Umformteil zu Halbzeug oder Gegenständen formbar zu sein. Thermoplastische Kunststoffe sind in der Technik weit verbreitet und finden sich in der Form von Fasern, Platten, Folien, Formkörpern, Flaschen, Ummantelungen, Verpackungen usw. Thermoplastisches Polyurethan (nachstehend als TPU bezeichnet) ist ein Elastomer, welches in vielen Anwendungen Verwendung findet, z. B. Schläuche, Schuhapplikationen, Folien, Fasern, Skistiefel. Die Herstellung von Skischuhen, beispielsweise Skistiefeln, insbesondere die äußeren, harten Schalen von Skistiefeln mittels Spritzguss aus thermoplastischen Kunststoffen ist allgemein bekannt.

Das Anforderungsprofil für thermoplastisches Polyurethan, das geeignet ist zur Herstellung von Skistiefeln, insbesondere deren äußere Schale, ist komplex. Zum einen sollten die Tieftemperatureigenschaften sehr gut sein, d. h. das Material sollte unter den Anwendungstemperaturen eine ausreichende Flexibilität aufweisen und nicht brechen oder splittern. Zum anderen wird hinsichtlich einer ansprechenden äußeren Gestaltung zunehmend eine hohe Transparenz des Materials gefordert, um möglichst breite farbliche Gestaltungsmöglichkeiten zu haben.

Aufgabe der vorliegenden Erfindung war es somit, thermoplastisches Polyurethan zur Herstellung von Skistiefeln zu entwickeln, das einen möglichst großen Spielraum bei Dekor und Design für die Skistiefel bietet. Zudem sollte das TPU gute mechanische Eigenschaften, insbesondere eine hohe Kerbschlagzähigkeit bei tiefen Temperaturen und gleichzeitig eine hohe Transparenz bei großen Wandstärken aufweisen.

Diese Aufgaben konnten durch die eingangs dargestellten thermoplastischen Polyurethane sowie die Verfahren zu ihrer Herstellung und insbesondere die eingangs dargestellten erfindungsgemäßen Skischuhe gelöst werden.

Durch den Einsatz eines Kettenverlängerergemisches erhält man Materialien, die für insbesondere für Skistiefel besonders geeignet sind. Diese Materialien besitzen ein relativ großes Verarbeitungsfenster und zeichnen sich durch eine hohe Transparenz bei gleichzeitig guten Tieftemperatureigenschaften aus. Die erfindungsgemäßen TPU weisen bevorzugt hohe E-Module und einen hohen Hartphasenanteil auf.

Bevorzugt sind Skischuhe, die TPU enthalten, bei denen der Stoffmengenanteil n1 des Hauptkettenverlängerers (c1) an der Gesamtstoffmenge n der eingesetzten Kettenverlängerer (c) zwischen 0,8 und 0,999, bevorzugt zwischen 0,90 und 0,999, beträgt. Als Kettenverlängerungsmittel (c) können 1,3-Propandiol und Butandiol-1,4 Dabei wird als Hauptkettenverlängerer (c1) 1,4-Butandiol und als Cokettenverlängerer (c2) 1,3-Propandiol eingesetzt, wobei sich Hauptkettenverlängerer (c1) und der oder die Cokettenverlängerer (c2) in der Anzahl der Kohlenstoffatome unterscheiden Hauptkettenverlängerer (c1) ist 1,4-Butandiol und das Isocyanat (a) 4,4'-Diphenylmethandiisocyanat (MDI) Cokettenverlänge (c2) ist 1,3-Propandiol.

Das erfindungsgemäße thermoplastische Polyurethan des Skischuhs weist bevorzugt einen Hartphasenanteil von größer 0,4, besonders bevorzugt größer 0,5 auf, wobei der Hartphasenanteil durch folgende Formel definiert ist:

$$Hartphasenanteil = \{\sum_{x=1}^{k}[(m_{KVx}/M_{KVx})^* M_{Iso} + m_{KVx}]\}/m_{ges}$$

mit den folgenden Bedeutungen:

$M_{KVx}$: Molare Masse der Kettenverlängerers x in g/mol
$m_{KVx}$: Masse des Kettenverlängerers x in g
$M_{Iso}$: Molare Masse des verwendeten Isocyanates in g/mol
$m_{ges}$: Gesamtmasse aller Ausgangsstoffe in g
k: Anzahl der Kettenverlängerer.

Besonders bevorzugt sind Skischuhe enthaltend thermoplastisches Polyurethan, das bei einer Schichtdicke h von 8,2 mm eine Transparenzzahl T von kleiner oder gleich 3,2 bestimmt nach DIN 55988 (Kennzahl 1 ohne Korrektur) aufweist.

Besonders bevorzugt sind ferner Skischuhe enthaltend thermoplastisches Polyurethan mit einer Charpy-Kerbschlagzähigkeit bei - 30 °C nach DIN EN ISO 179-1/ 1eA von größer als 10 kJ/m$^2$, bevorzugt von größer als 15kJ/m$^2$ aufweist.

Verfahren zur Herstellung von thermoplastischen Polyurethanen, in dieser Schrift auch als TPU bezeichnet, sind allgemein bekannt. Im allgemeinen werden TPUs durch Umsetzung von (a) Isocyanaten mit (b) gegenüber Isocyanaten reaktiven Verbindungen, üblicherweise mit einem Molekulargewicht ($M_n$) von 500 bis 10000, bevorzugt 500 bis 5000, besonders bevorzugt 800 bis 3000 und (c) Kettenverlängerungsmitteln mit einem Molekulargewicht ($M_n$) von 50 bis 499 gegebenenfalls in Gegenwart von (d) Katalysatoren und/oder (e) üblichen Zusatzstoffen hergestellt.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b), (c) sowie gegebenenfalls (d) und/oder (e) sollen im Folgenden beispielhaft beschrieben werden:

a) Als organisches Isocyanat (a) wird 4,4'-Diphenylmethandüsocyanat (MDI), 4,4'-MDI verwendet.

b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten ($M_n$) zwischen 500 und 8000, bevorzugt 600 bis 6000, insbesondere 800 bis weniger als 3000, und bevorzugt einer mittleren Funktionalität gegenüber Isocyanaten von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylenglykole. Die Polyetherole weisen den Vorteil auf, dass sie eine höhere Hydrolysestabilität als Polyesterole besitzen. Weiterhin können als Polyetherole sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden zumeist durch Anlagerung von Alkylenoxiden, insbesondere Ethylenoxid, Propylenoxid und Mischungen daraus, an die oben beschriebenen Diole oder Triole in Gegenwart von hochaktiven Katalysatoren hergestellt. Derartige hochaktive Katalysatoren sind beispielsweise Cäsiumhydroxid und Multimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration. Statt eines Polyols können auch Mischungen verschiedener Polyole eingesetzt werden. Besonders bevorzugt basiert das erfindungsgemäße thermoplastische Polyurethan auf Polytetramethylenglykol mit einem Molekulargewicht ($M_n$) zwischen 600 und 2000 g/mol, bevorzugt 800 und 1400 g/mol, besonders bevorzugt 950 und 1050 g/mol als (b) gegenüber Isocyanaten reaktiven Verbindungen mit einem Molekulargewicht ($M_n$) zwischen 500 und 10000 g/mol.

Besonders bevorzugt handelt es sich bei den Komponenten a) bis c) um difunktionelle Verbindungen, d.h. Diisocyanate (a), difunktionelle Polyole, bevorzugt Polyetherole (b) und difunktionelle Kettenverlängerungsmittel, bevorzugt Diole.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.

e) Neben Katalysatoren (d) können den Aufbaukomponenten (a) bis (c) auch übliche Hilfsmittel und/oder Zusatzstoffe (e) hinzugefügt werden. Genannt seien beispielsweise oberflächenaktive Substanzen, Keimbildungsmittel, Gleit- und Entformungshilfen, Farbstoffe und Pigmente, Antioxidantien, z. B. gegen Hydrolyse, Licht, Hitze oder Verfärbung, anorganische und/oder organische Füllstoffe, Flammschutzmittel, Verstärkungsmittel und Weichmacher, Metalldeaktivatoren. In einer bevorzugten Ausführungsform fallen unter die Komponente (e) auch Hydrolyseschutzmittel wie beispielsweise polymere und niedermolekulare Carbodiimide. Bevorzugt enthält das thermoplastische Polyurethan Triazol und/oder Triazolderivat und Antioxidantien in einer Menge von 0,1 bis 5 Gew.-% bezogen auf das Gesamtgewicht des thermoplastischen Polyurethans. Als Antioxidantien sind im allgemeinen Stoffe geeignet, welche unerwünschte oxidative Prozesse im zu schützenden Kunststoff hemmen oder verhindern. Im allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für sterisch gehinderte Phenole finden sich in Plastics Additive Handbook, 5th edition, H. Zweifel, ed, Hanser Publishers, München, 2001 ([1]), S.98-107 und S.116-121. Beispiele für Aromatische Amine finden sich in [1] S.107-108. Beispiele für Thiosynergisten sind gegeben in [1], S.104-105 und S.112-113. Beispiele für Phosphite finden sich in [1], S.109-112. Beispiele für Hindered Amine Light Stabilizer sind gegeben in [1], S.123-136. In einer bevorzugten Ausführungsform weisen die Antioxidantien, insbesondere die phenolischen Antioxidantien, eine Molmasse von größer 350 g/mol, besonders bevorzugt von größer 700 g/mol und einer maximalen Molmasse < 10000 g/mol bevorzugt < 3000 g/mol auf. Ferner besitzen sie bevorzugt einen Schmelzpunkt von kleiner 180 °C. Weiterhin werden bevorzugt Antioxidantien verwendet, die amorph oder flüssig sind. Ebenfalls können als Komponente (i) auch Gemische von zwei oder mehr Antioxidantien verwendet werden.

Neben den genannten Komponenten a), b) und c) und gegebenenfalls d) und e) können auch Kettenregler, üblicherweise mit einem Molekulargewicht von 31 bis 3000, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente (c).

Alle in dieser Schrift genannten Molekulargewichte weisen die Einheit [g/mol] auf.

Zur Einstellung von Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Die Umsetzung kann bei üblichen Kennzahlen erfolgen, bevorzugt bei einer Kennzahl zwischen 950 und 1050, besonders bevorzugt bei einer Kennzahl zwischen 970 und 1010, insbesondere zwischen 980 und 995. Die Kennzahl ist definiert durch das Verhältnis der insgesamt bei der Umsetzung eingesetzten Isocyanatgruppen der Komponente (a) zu den gegenüber Isocyanaten reaktiven Gruppen, d. h. den aktiven Wasserstoffen, der Komponenten (b) und (c). Bei einer Kennzahl von 1000 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 1000 liegen mehr Isocyanatgruppen als OH-Gruppen vor. Die Herstellung der TPU kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozeß erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (c), (d) und/oder (e) einzeln oder als Gemisch in den Extruder eingeführt, z. B. bei Temperaturen von 100 bis 280 °C, vorzugsweise 140 bis 250 °C zur Reaktion gebracht, das erhaltene TPU wird extrudiert, abgekühlt und granuliert.

Verwendung finden die erfindungsgemäßen thermoplastisch verarbeitbaren Polyurethanelastomere zur Herstellung von Skischuhen, bevorzugt Skistiefeln, insbesondere Außenschalen von Skistiefeln, Skistiefelabsätze, Manschetten für den Skistiefelschaft und Dekorelemente. Die Herstellung dieser Produkte mittels üblicher Spritzguss-Verfahren ist allgemein bekannt.

Beispiele:

Beispiel 1 (Vergleichsbeispiel)

Ein handelsübliches TPU (Elastollan® 1164D 15, Elastogran GmbH) hergestellt aus MDI, 1,4-Butandiol und Polytetramethylenglykol (OHZ von 113,3 mg KOH/g) mit einem Hartphasenanteil von 0,53 wurde zu Spritzplatten (Dimension der Spritzplatten 200 x 150 x 8,2 mm, Bedingungen siehe Tabelle 1 und 2) verarbeitet. Die Oberfläche der Spritzplatten wurde durch einminütiges Tauchen in THF geglättet und dann nach DIN 55988 (Kennzahl 1 ohne Korrektur, Gerät: Hunterlab UltraScan) bei einer Schichtdicke h von 8,2 mm eine Transparenzzahl T von 7,0 bestimmt. Die Charpy-Kerbschlagzähigkeit bei - 30 °C nach DIN EN ISO 179-1/1eA des Materials wurde zu 7 kJ/m$^2$ bestimmt.

Beispiel 2 (Vergleichsbeispiel)

Ein TPU wurde aus MDI, 1,4-Butandiol und Polytetramethylenglykol (OHZ von 113,3 mg KOH/g) mit einem Hartphasenanteil von 0,53 mit einem Doppelwellenextruder Typ ZSK 58 der Firma Werner und Pfleiderer Stuttgart mit einer Verfahrensteillänge von 48 D, unterteilt in 12 Gehäuse hergestellt. Die Granulierung erfolgte mittels einer üblichen Unterwassergranuliereinrichtung der Firma Gala (UWG). Das Material wurde anschließend zu Spritzplatten (Dimension der Spritzplatten 200 x 150 x 8,2 mm, Bedingungen siehe Tabelle 1 und 2) verarbeitet. Die Oberfläche der Spritzplatten wurde durch einminütiges Tauchen in THF geglättet und dann nach DIN 55988 (Kennzahl 1 ohne Korrektur, Gerät: Hunterlab UltraScan) bei einer Schichtdicke h von 8,2 mm eine Transparenzzahl T von 3,7 bestimmt. Die Charpy-Kerbschlagzähigkeit bei - 30 °C nach DIN EN ISO 179-1/1eA des Materials wurde zu 9 kJ/m$^2$ bestimmt.

Beispiel 3

Ein Material basierend auf MDI, 1,4-Butandiol, 1,3-Propandiol und Polytetramethylenglykol (OHZ von 113,3 mg KOH/g) mit einem Hartphasenanteil von 0,51 wurde mit einem Doppelwellenextruder Typ ZSK 92 der Firma Werner und Pfleiderer Stuttgart mit einer Verfahrensteillänge von 48 D, unterteilt in 12 Gehäuse hergestellt. Dabei wurden 1,3-Propandiol und 1,4-Butandiol in einem Stoffmengenverhältnis von 1: 30,7 eingesetzt. Die Granulierung erfolgte mittels einer üblichen Unterwassergranuliereinrichtung der Firma Gala (UWG). Das Material wurde anschließend zu Spritzplatten (Dimension der Spritzplatten 200 x 150 x 8,2 mm, Bedingungen siehe Tabelle 1 und 2) verarbeitet. Die Oberfläche der Spritzplatten wurde durch einminütiges Tauchen in THF geglättet und dann nach DIN 55988 (Kennzahl 1 ohne Korrektur, Gerät: Hunterlab UltraScan) bei einer Schichtdicke h von 8,2 mm eine Transparenzzahl T von 3,0 bestimmt. Die Charpy-Kerbschlagzähigkeit bei - 30 °C nach DIN EN ISO 179-1/1eA des Materials wurde zu 25 kJ/m$^2$ bestimmt.

Beispiel 4

Ein TPU basierend auf MDI, 1,4-Butandiol, 1,3-Propandiol und Polytetramethylenglykol (OHZ von 113,3 mg KOH/g) mit einem Hartphasenanteil von 0,56 wurde analog zu Beispiel 3 hergestellt. Dabei wurden 1,3-Propandiol und 1,4-Butandiol in einem Stoffmengenverhältnis von 1: 24,2 eingesetzt. Das Material wurde anschließend zu Spritzplatten (Dimension der Spritzplatten 200 x 150 x 8,2 mm, Bedingungen siehe Tabelle 1 und 2) verarbeitet. Die Oberfläche der Spritzplatten wurde durch einminütiges Tauchen in THF geglättet und dann nach DIN 55988 (Kennzahl 1 ohne Korrektur, Gerät: Hunterlab UltraScan) bei einer Schichtdicke h von 8,2 mm eine Transparenzzahl T von 2,5 bestimmt. Die Charpy-Kerbschlagzähigkeit bei - 30 °C nach DIN EN ISO 179-1/1eA des Materials wurde zu 13,5 kJ/m$^2$ bestimmt.

Tabelle 1: Bedingungen für die Herstellung der Spritzplatten zu Bsp. 1-5 auf einer DEMAG ergotech 200.

| Bsp. | Dosierung | | Einspritzen | | | Zeiten n | | | | | Drücke e | | | |
|---|---|---|---|---|---|---|---|---|---|---|---|---|---|---|
| | Dosier-Hub | Drehzahl | Einspritzgeschw. | Umschaltpunkt | Polster | Zyklus-zeit | Kuhtzeit | Plastifizierzeit | Ein-spritz zeit | Nach-druck zeit | Einspritzdruck | Nachdruck | Staudruck | Hydromotor |
| | mm | U/min | mm/s | mm | mm | 5 | s | s | s | s | System bar | System bar | System bar | System bar |
| 1 | 153 | 55 | 45,0 | 11,00 | 7,5 | 159,0 | 80 | 37 | 3,4 | 50 | 81 | 48 | 20 | 120 |
| 2 | 153 | 55 | 80,0 | 11,00 | 8 | 151 | 80 | 32 | 1,9 | 50 | 134 | 55 | 20 | 130 |
| 3 | 153 | 55 | 45,0 | 11,00 | 8 | 167 | 80 | 35 | 3,4 | 50 | 99 | 48 | 20 | 123 |
| 4 | 150 | 55 | 45,0 | 11,00 | 7,00 | 153 | 80 | 28 | 3,3 | 50 | 102 | 44 | 20 | 120 |
| 5 | 150 | 55 | 45,0 | 11,00 | 7,0 | 155,0 | 80 | 28 | 3,3 | 50 | 104 | 45 | 20 | 125 |

Tabelle 2: Bedingungen für die Herstellung der Spritzplatten zu Bsp. 1-5 auf einer DEMAG ergotech 200.

| Bsp. | Temperaturen | | | | | | | | | | |
|---|---|---|---|---|---|---|---|---|---|---|---|
| | Werkzeug | | Spritzaggregat | | | | | | Heisskanal | | |
| | Spritz-S. | Schl -S. | Et-Zone | Zone 1 | Zone 2 | Zone 3 | Zone 4 | Duse | 1 | 2 | |
| | °C | °C | °C | °C | °C | °C | °C | °C | °C | °C | |
| **1** | 20 | 45 | 40 | 210 | 220 | 230 | 235 | 235 | 235 | 230 | |
| **2** | 20 | 45 | 40 | 205 | 210 | 210 | 215 | 215 | 215 | 210 | |
| **3** | 20 | 45 | 40 | 210 | 220 | 230 | 235 | 235 | 235 | 230 | |
| **4** | 20 | 45 | 40 | 210 | 220 | 225 | 225 | 225 | 225 | 220 | |
| **5** | 20 | 45 | 40 | 210 | 220 | 225 | 225 | 220 | 220 | 215 | |

## Patentansprüche

1. Verfahren zur Herstellung von thermoplastischem Polyurethan durch Umsetzung von (a) dem Isocyanat 4,4'-Diphenylmethandiisocyanat (MDI) mit (b) gegenüber Isocyanaten reaktiven Verbindungen mit einem Molekulargewicht ($M_w$) zwischen 500 und 10000 g/mol und (c) Kettenverlängerungsmitteln mit einem Molekulargewicht zwischen 50 und 499 g/mol gegebenenfalls in Gegenwart von (d) Katalysatoren und/oder (e) üblichen Zusatzstoffen, **dadurch gekennzeichnet, dass** man ein Kettenverlängerergemisch bestehend aus einem Hauptkettenverlängerer 1,4-Butandiol (c1) und einem Cokettenverlängerer 1,3-Propandiol (c2) einsetzt und das hergestellte thermoplastische Polyurethan einen Hartphasenanteil von größer 0,40 aufweist, wobei der Hartphasenanteil durch folgende Formel definiert ist:

$$Hartphasenanteil = \{\sum_{x=1}^{k}[(m_{KVx} / M_{KVx}) * M_{Iso} + m_{KVx}]\} / m_{ges}$$

mit den folgenden Bedeutungen:

$M_{KVx}$: Molare Masse der Kettenverlängerers x in g/mol
$m_{KVx}$: Masse des Kettenverlängerers x in g
$M_{ISO}$: Molare Masse des verwendeten Isocyanates in g/mol
$m_{ges}$: Gesamtmasse aller Ausgangsstoffe in g
k: Anzahl der Kettenverlängerer.

2. Thermoplastisches Polyurethan erhältlich durch ein Verfahren gemäß Anspruch 1.

3. Skischuh basierend auf thermoplastischem Polyurethan erhältlich durch Umsetzung von (a) dem Isocyanat 4,4'-Diphenylmethandiisocyanat (MDI) mit (b) gegenüber Isocyanaten reaktiven Verbindungen mit einem Molekulargewicht ($M_w$) zwischen 500 und 10000 g/mol und (c) Kettenverlängerungsmitteln mit einem Molekulargewicht zwischen 50 und 499 g/mol gegebenenfalls in Gegenwart von (d) Katalysatoren und/oder (e) üblichen Zusatzstoffen, **dadurch gekennzeichnet, dass** der Kettenverlängerer (c) ein Gemisch darstellt mit einem Hauptkettenverlängerer 1,4-Butandiol (c1) und einem Cokettenverlängerer 1,3 Propandiol (c2).

4. Skischuh nach Anspruch 3, **dadurch gekennzeichnet, dass** der Stoffmengenanteil n1 des Hauptkettenverlängerers (c1) an der Gesamtstoffmenge n der eingesetzten Kettenverlängerer (c) zwischen 0,80 und 0,999 beträgt.

5. Skischuh nach Anspruch 3, **dadurch gekennzeichnet, dass** das thermoplastische Polyurethan basiert auf Polytetramethylenglykol mit einem Molekulargewicht ($M_n$) zwischen 600 und 2000 g/mol als (b) gegenüber Isocyanaten reaktiven Verbindungen mit einem Molekulargewicht ($M_n$) zwischen 500 und 10000 g/mol.

6. Skischuh nach Anspruch 3, **dadurch gekennzeichnet, dass** das thermoplastische Polyurethan einen Hartphasenanteil von größer 0,4 aufweist, wobei der Hartphasenanteil durch folgende Formel definiert ist:

$$\text{Hartphasenanteil} = \{\sum_{x=1}^{k}[(m_{KVx}/M_{KVx}) * M_{Iso} + m_{KVx}]\}/m_{ges}$$

mit den folgenden Bedeutungen:

$M_{KVx}$: Molare Masse der Kettenverlängerers x in g/mol
$m_{KVx}$: Masse des Kettenverlängerers x in g
$M_{Iso}$: Molare Masse des verwendeten Isocyanates in g/mol
$m_{ges}$: Gesamtmasse aller Ausgangsstoffe in g
k: Anzahl der Kettenverlängerer.

7. Skischuh nach Anspruch 3, **dadurch gekennzeichnet, dass** das thermoplastische Polyurethan bei einer Schichtdicke h von 8,2 mm eine Transparenzzahl T von kleiner oder gleich 3,2 bestimmt nach DIN 55988 (Kennzahl 1 ohne Korrektur) aufweist.

8. Skischuh nach Anspruch 3, **dadurch gekennzeichnet, dass** das thermoplastische Polyurethan eine Charpy-Kerbschlagzähigkeit bei - 30 °C nach DIN EN ISO 179-1/1 eA von größer als 10 kJ/m$^2$ aufweist.

9. Verfahren zur Herstellung von Skischuhen, **dadurch gekennzeichnet, dass** man ein thermoplastisches Polyurethan gemäß Anspruch 2 mittels Spritzguss zum Skischuh verarbeitet.

**Claims**

1. A process for the preparation of thermoplastic polyurethane by reacting (a) the isocyanate diphenylmethane 4,4'-diisocyanate (MDI) with (b) compounds reactive toward isocyanates and having a molecular weight ($M_w$) of from 500 to 10 000 g/mol and (c) chain extenders having a molecular weight of from 50 to 499 g/mol, optionally in the presence of (d) catalysts and/or (e) conventional additives, wherein a chain extender mixture consisting of a main chain extender 1,4-butanediol (c1) and a co-chain extender 1,3-propanediol (c2) is used and the thermoplastic polyurethane prepared has a rigid phase fraction of greater than 0.40, the rigid phase fraction being defined by the following formula:

$$\text{Rigid phase fraction} = \{\sum_{x=1}^{k}[(m_{KVx}/M_{KVx}) * M_{Iso} + m_{KVx}]\}/m_{ges}$$

with the following meanings:

$M_{KVx}$: molar mass of the chain extender x in g/mol
$m_{KVx}$: mass of the chain extender x in g
$M_{ISO}$: molar mass of the isocyanate used in g/mol
$m_{ges}$: total mass of all starting materials in g
k: number of chain extenders.

2. A thermoplastic polyurethane obtainable by a process according to claim 1.

3. A ski shoe based on thermoplastic polyurethane obtainable by reacting (a) the isocyanate diphenylmethane 4,4'-diisocyanate (MDI) with (b) compounds reactive toward isocyanates and having a molecular weight ($M_w$) of from 500 to 10 000 g/mol and (c) chain extenders having a molecular weight of from 50 to 499 g/mol, optionally in the presence of (d) catalysts and/or (e) conventional additives, wherein the chain extender (c) is a mixture comprising a main chain extender 1,4-butanediol (c1) and a co-chain extender 1,3-propanediol (c2).

**4.** The ski shoe according to claim 3, wherein the proportion n1 of the main chain extender (c1), based on the total amount n of the chain extender (c) used, is from 0.80 to 0.999.

**5.** The ski shoe according to claim 3, wherein the thermoplastic polyurethane is based on polytetramethylene glycol having a molecular weight ($M_n$) of from 600 to 2000 g/mol as (b) compounds reactive toward isocyanates and having a molecular weight ($M_n$) of from 500 to 10 000 g/mol.

**6.** The ski shoe according to claim 3, wherein the thermoplastic polyurethane has a rigid phase fraction of greater than 0.4, the rigid phase fraction being defined by the following formula:

$$Rigid\ phase\ fraction = \{\sum_{x=1}^{k} [(m_{KVx} / M_{KVx})^* M_{Iso} + m_{KVx}]\} / m_{ges}$$

with the following meanings:

$M_{KVx}$: molar mass of the chain extender x in g/mol
$m_{KVx}$: mass of the chain extender x in g
$M_{Iso}$: molar mass of the isocyanate used in g/mol
$m_{ges}$: total mass of all starting materials in g
k: number of chain extenders.

**7.** The ski shoe according to claim 3, wherein the thermoplastic polyurethane has a transparency value T of less than or equal to 3.2, determined according to DIN 55988 (index 1 without correction), at a layer thickness H of 8.2 mm.

**8.** The ski shoe according to claim 3, wherein the thermoplastic polyurethane has a Charpy notched impact strength of -30°C according to DIN EN ISO 179-1/1eA of greater than 10 kJ/m$^2$.

**9.** A process for the production of ski shoes, wherein a thermoplastic polyurethane according to claim 2 is processed by means of injection molding to give the ski shoe.

**Revendications**

**1.** Procédé pour la préparation de polyuréthane thermoplastique par transformation de (a) l'isocyanate 4,4'-diphénylméthanediisocyanate (MDI) avec (b) des composés réactifs par rapport aux isocyanates présentant un poids moléculaire ($M_w$) entre 500 et 10 000 g/mole et (c) des agents d'allongement de chaîne présentant un poids moléculaire entre 50 et 499 g/mole, le cas échéant en présence de (d) des catalyseurs et/ou (e) des additifs usuels, **caractérisé en ce qu'**on utilise un mélange d'agents d'allongement de chaîne constitué par un agent d'allongement de chaîne principal, le 1,4-butanediol, (c1) et co-agent d'allongement de chaîne, le 1,3-propanediol, (c2) et le polyuréthane thermoplastique préparé présente une proportion de phases dures supérieure à 0,40, la proportion de phases dures étant définie par la formule suivante :

$$proportion\ de\ phases\ dures = \left\{\sum_{x=1}^{k} [(m_{KVx} / M_{KVx})^* M_{Iso} + m_{KVx}]\right\} / m_{ges}$$

présentant les significations suivantes :

$M_{KVx}$ : masse molaire de l'agent d'allongement de chaîne x en g/mole
$m_{KVx}$ : masse de l'agent d'allongement de chaîne x en g
$M_{Iso}$ : masse molaire de l'isocyanate utilisé en g/mole
$m_{ges}$ : masse totale de toutes les substances de départ en g
k : nombre d'agents d'allongement de chaîne.

**2.** Polyuréthane thermoplastique pouvant être obtenu par un procédé selon la revendication 1.

3. Bottine de ski à base de polyuréthane thermoplastique pouvant être obtenue par transformation de (a) l'isocyanate 4,4'-diphénylméthanediisocyanate (MDI) avec (b) des composés réactifs par rapport aux isocyanates présentant un poids moléculaire ($M_w$) entre 500 et 10 000 g/mole et (c) des agents d'allongement de chaîne présentant un poids moléculaire entre 50 et 499 g/mole, le cas échéant en présence de (d) des catalyseurs et/ou (e) des additifs usuels, **caractérisée en ce que** l'agent d'allongement de chaîne (c) représente un mélange, contenant un agent d'allongement de chaîne principal, le 1,4-butanediol, (c1) et un co-agent d'allongement de chaîne, le 1,3 propanediol, (c2).

4. Bottine de ski selon la revendication 3, **caractérisée en ce que** la proportion en masse de matière n1 de l'agent d'allongement de chaîne (c1) par rapport à la quantité en masse totale n d'agent d'allongement de chaîne utilisé (c) est située entre 0,80 et 0,999.

5. Bottine de ski selon la revendication 3, **caractérisée en ce que** le polyuréthane thermoplastique est à base de polytétraméthylèneglycol, présentant un poids moléculaire ($M_n$) entre 600 et 2000 g/mole en tant que (b) composés réactifs par rapport aux isocyanates présentant un poids moléculaire ($M_n$) entre 500 et 10 000 g/mole.

6. Bottine de ski selon la revendication 3, **caractérisée en ce que** le polyuréthane thermoplastique présente une proportion de phases dures supérieure à 0,4, la proportion de phases dures étant définie par la formule suivante :

$$proportion\ de\ phases\ dures = \left\{ \sum_{x=1}^{k} [(m_{KVx} / M_{KVx}) * M_{Iso} + m_{KVx}] \right\} / m_{ges}$$

présentant les significations suivantes :

$M_{KVx}$ : masse molaire de l'agent d'allongement de chaîne x en g/mole
$m_{KVx}$ : masse de l'agent d'allongement de chaîne x en g
$M_{ISO}$ : masse molaire de l'isocyanate utilisé en g/mole
$m_{ges}$ : masse totale de toutes les substances de départ en g
k : nombre d'agents d'allongement de chaîne.

7. Bottine de ski selon la revendication 3, **caractérisée en ce que** le polyuréthane thermoplastique, à une hauteur de couche h de 8,2 mm, présente un indice de transparence T inférieur ou égal à 3,2, déterminé selon la norme DIN 55988 (indice 1 sans correction).

8. Bottine de ski selon la revendication 3, **caractérisée en ce que** le polyuréthane thermoplastique présente une résilience à l'impact Charpy à -30°C selon la norme DIN EN ISO 179-1/1eA supérieure à 10 kJ/m$^2$.

9. Procédé pour la préparation de bottines de ski, **caractérisé en ce qu'**on transforme un polyuréthane thermoplastique selon la revendication 2 par moulage par injection en bottine de ski.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Plastics Additive Handbook. Hanser Publishers, 2001, 98-107116-121